# EUROPÄISCHE PATENTSCHRIFT

(11) **EP 1 290 055 B1**
(45) Veröffentlichungstag und Bekanntmachung des Hinweises auf die Patenterteilung: **25.02.2004**
(21) Anmeldenummer: 01960309.1
(22) Anmeldetag: 13.06.2001
(51) Int. Cl.: C08G 18/08, D06M 15/564

(54) **VERWENDUNG VON POLYMEREN, DIE URETHAN- UND/ODER HARNSTOFFGRUPPEN AUFWEISEN, ZUR MODIFIZIERUNG VON OBERFLÄCHEN**
USE OF POLYMERS CONTAINING URETHANE AND/OR UREA GROUPS FOR THE MODIFICATION OF SURFACES
UTILISATION DE POLYMERES COMPORTANT DES GROUPES URETHANE ET/OU UREE POUR LA MODIFICATION DE SURFACES

(30) Priorität: 13.06.2000 DE 10029026; 28.03.2001 DE 10115255
(43) Veröffentlichungstag der Anmeldung: 12.03.2003
(73) Patentinhaber: BASF AKTIENGESELLSCHAFT, 67056 Ludwigshafen (DE)
(72) Erfinder: ANDRE, Valerie, 67063 Ludwigshafen (DE); BERTLEFF, Werner, 68519 Viernheim (DE); HÄBERLE, Karl, 67346 Speyer (DE); HUFF, Jürgen, 67063 Ludwigshafen (DE); NÖRENBERG, Ralf, 55218 Ingelheim (DE); SCHREPP, Wolfgang, 69118 Heidelberg (DE); MEFFERT, Helmut, 68167 Mannheim (DE); SCHMIDT, Kati, 67063 Ludwigshafen (DE)
(74) Vertreter: Pohl, Michael, Dr.
(86) Internationale Anmeldenummer: PCT/EP2001/006719
(87) Internationale Veröffentlichungsnummer: WO 2001/096433

(56) Entgegenhaltungen:
- EP-A- 0 272 941
- DE-A- 3 719 502
- DE-A- 19 715 416
- FR-A- 2 434 830
- US-A- 5 633 307

## Beschreibung

Die vorliegende Erfindung betrifft teilchen-, linien-, flächenförmige oder dreidimensionale Gebilde, die zumindest auf ihrer Oberfläche eine hydrophilierend wirkende Menge eines Polymers aufweisen, das Urethan- und/oder Harnstoffgruppen sowie Ammoniumgruppen aufweist. Die Erfindung betrifft weiterhin ein Polymer, bestehend aus wenigstens einem Polyisocyanat und wenigstens einer Verbindung mit mindestens zwei gegenüber Isocyanatgruppen reaktiven Gruppen und mindestens einer tertiären Aminogruppe in eingebauter Form sowie ein Verfahren zur Modifizierung der Oberflächeneigenschaften teilchen-, linien-, flächenförmiger oder dreidimensionaler Gebilde.

Gegenstände aus synthetischen Materialien, wie duroplastische oder thermoplastische Kunststoffe, weisen in der Regel hydrophobe Oberflächeneigenschaften auf. Vielfach sind hydrophobe Eigenschaften jedoch unerwünscht, wenn die Gegenstände beklebt, beschichtet, bedruckt, gefärbt oder lackiert werden sollen, da die meisten Klebstoffe, Beschichtungsmittel oder Anstrichmittel auf hydrophoben Oberflächen nur unzureichende Haftung zeigen. Hydrophobe Eigenschaften sind auch bei flächenförmigen textilen Gebilden, wie insbesondere Vliesstoffen unerwünscht. Vliesstoffe werden z. B. als Putz- und Wischtücher, Spültücher und Servietten verwendet. Bei diesen Anwendungen ist es wichtig, dass z. B. verschüttete Flüssigkeiten, wie Milch, Kaffee usw. beim Aufwischen rasch und vollständig aufgesaugt und feuchte Oberflächen möglichst vollständig getrocknet werden. Ein Putztuch saugt Flüssigkeiten umso rascher auf, je schneller deren Transport auf der Faseroberfläche erfolgt, wobei Fasern mit hydrophiler Oberfläche von wässrigen Flüssigkeiten leicht und rasch benetzt werden.

Um die Oberflächen von Folien oder Formkörpern zu hydrophilieren sind verschiedene Verfahren üblich. Z. B. können die Oberflächen von Kunststoffartikeln durch gasförmiges Fluor aktiviert werden. Dieses Verfahren erfordert allerdings das Arbeiten mit dem hochgiftigen Gas Fluor unter einem erhöhten apparativen Aufwand. Daneben werden Korona- oder Plasmabehandlungen angewandt, um die Hydrophilie der Oberfläche verschiedener Materialien wie Kunststoffen oder Metallen zu erhöhen.

Zur Verbesserung der Wasseraufnahmeeigenschaften von Vliesstoffen werden auch oberflächenaktive hydrophilierende Agentien, wie Emulgatoren, Tenside oder Netzmittel eingesetzt. Hierdurch wird eine ausgezeichnete Anfangshydrophilie erreicht. Diese Vliesstoffe weisen aber den Nachteil auf, dass die hydrophilen Agentien durch Wasser oder andere wässrige Medien allmählich ausgewaschen werden.

Nach mehrmaligem Wasserkontakt wird das Erzeugnis zunehmend hydrophober. Ein weiterer Nachteil der bekannten oberflächenaktiven Agentien besteht in der starken Herabsetzung der Grenzflächenspannung von Wasser, so dass in vielen Anwendungen, insbesondere bei Hygiene- und Windelvliesen die Permeationsneigung und das Netzvermögen der aufgesaugten Flüssigkeit unerwünscht erhöht ist.

Die WO 98/27263 offenbart beständig hydrophile Polymerbeschichtungen für Polyester-, Polypropylen- und ähnliche Fasern. Die Beschichtung enthält bestimmte Polyoxyproylamine oder Polypropylenoxidpolymere und Ethylentherephthalateinheiten enthaltende hydrophile Polyestercopolymere.

Die WO 97/00351 beschreibt dauerhaft hydrophile Polymerbeschichtungen für Polyester-, Polyethylen- oder Polypropylenfasern und - gewebe, die hydrophile Copolyester sowie Polypropylenoxidpolymere enthalten.

Der vorliegenden Erfindung liegt die Aufgabe zugrunde, hydrophil ausgerüstete teilchen-, linien-, flächenförmige oder dreidimensionale Gebilde sowie ein Verfahren zur Erhöhung der Oberflächenhydrophilie derartiger Gebilde bereitzustellen.

Erfindungsgemäß wird diese Aufgabe gelöst durch ein teilchen-, linien-, flächenförmiges oder dreidimensionales Gebilde, enthaltend zumindest auf seiner Oberfläche eine hydrophilierend wirkende Menge wenigstens eines Polymers, das Urethan- und/oder Harnstoffgruppen sowie Ammoniumgruppen aufweist.

Bevorzugte Ausgestaltungen des erfindungsgemäßen Gebildes sind linien- oder flächenförmige textile Gebilde. Andere bevorzugte Ausgestaltungen des erfindungsgemäßen Gebildes sind Kunststofffolien oder Kunststoffformkörper.

Der Begriff "teilchenförmige Gebilde" umfasst den Bereich der feinen Pigmente bis hin zu makroskopischen Partikeln. Dazu zählen insbesondere solche mit einer Teilchengrößen von 1 nm bis 10 mm insbesondere 10 nm bis 1 mm, die vorzugsweise in einem Medium dispergierbar oder dispergiert sind. Als Beispiele lassen sich Pigmente, mineralische oder metallische Füllstoffe oder unbelebte organische Materialien nennen.

Unter linienförmigen Gebilden werden insbesondere Fasern, Filamente, Garne, Fäden und dergleichen verstanden. Flächenförmige Gebilde sind insbesondere Gewebe, Gewirke, Filze, Vliese oder Vliesstoffe, wobei letztere bevorzugt sind. Zur Herstellung eines Vliesstoffs wird ein Gefüge von Fasern (Vlies) abgelegt, das anschließend nach unterschiedlichen Verfahren zu Vliesstoffen verfestigt wird. Z. B. wird das Vlies mit einem wässrigen Bindemittel, z. B. einem Polymerlatex behandelt und anschließend, gegebenenfalls nach Entfernung von überschüssigem Bindemittel, getrocknet und gegebenenfalls gehärtet. Flächenförmige Gebilde sind auch Folien, Papier und vergleichbare zweidimensionale Gebilde.

Unter linienförmigen textilen Gebilden werden im Rahmen der vorliegenden Anmeldung auch Textilverbundstoffe, wie z. B. Teppiche, kaschierte und laminierte Textilien etc. verstanden.

Dreidimensionale Gebilde sind allgemein Formkörper unterschiedlichster Dimensionen. Dazu zählen insbesondere Formkörper aus Holz, Papier, Metallen, Kunststoffen, keramischen Trägern, Geweben aus natürlichen oder synthetischen Fasern in Form von Fluffs, Tissues etc.

Bevorzugte Ausgestaltungen des erfindungsgemäßen Gebildes sind linien- oder flächenförmige textile Gebilde. Andere bevorzugte Ausgestaltungen des erfindungsgemäßen Gebildes sind Kunststofffolien oder Kunststoffformkörper.

Vorzugsweise umfassen die erfindungsgemäß eingesetzten Gebilde wenigstens ein natürliches oder synthetisches polymeres Material.

Beispiele für derartige Materialien sind:
1. Polymere von Mono- und Diolefinen, beispielsweise Polypropylen, Polyisobutylen, Polybuten-1, Poly-4-methyl-penten-1, Polyisopren oder Polybutadien sowie Polymerisate von Cycloolefinen, wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).
   Polyolefine, d. h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere radikalisch oder mittels Katalysator, wobei der Katalysator gewöhnlich ein oder mehrere Metalle der Gruppe IVb, Vb, VIb oder VIII enthält. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1. genannten Polymeren, z. B. Mischungen von Polypropylen mit Polyisobutylen, Polypropylen mit Polyethylen (z. B. PP/HDPE, PP/LDPE) und Mischungen verschiedener Polyethylentypen (z. B. LDPE/HDPE).
3. Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexandien, Dicyclopentadien oder Ethylidennorbornen; ferner Mischungen solcher Copolymere untereinander und mit unter 1. genannten Polymeren, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren, wie z. B. Polyamiden.
4. Kohlenwasserstoffharze, inklusive hydrierte Modifikationen davon (z. B. Klebrigmacherharze) und Mischungen von Polyalkylenen und Stärke.
5. Polystyrol, Poly-(p-methylstyrol), Poly-(a-methylstyrol).
6. Copolymere von Styrol oder α-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6. genannten Copolymeren, wie sie z. B. als sogenannte ABS-, MBS-, ASA- oder AES-Polymere bekannt sind.
8. Halogenhaltige Polymere, wie z. B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9. genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd, oder deren Copolymere mit Bisglycidylethern.
13. Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide, z. B. ausgehend von p-Phenylendiamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylenterephthalamid oder Poly-m-phenylen-isophthalamid. Geeignet sind auch Block-Copolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Geeignet sind ferner mit EPDM oder ABS modifizierte Polyamide oder Copolyamide sowie während der Verarbeitung kondensierte Polyamide ("RIM-Polyamidsysteme").
17. Polyharnstoffe, Polyimide, Polyamidimide, Polyetherimide, Polyesterimide, Polyhydantoine und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate sowie Block-Polyetherester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z. B. von Epoxyacrylaten, Urethanacrylaten oder Polyesteracrylaten.
25. Alkydharze, Polyesterharze und Acrylatharze, die mit Melaminharzen, Harnstoffharzen, Isocyanaten, Isocyanuraten, Polyisocyanaten oder Epoxidharzen vernetzt sind.
26. Vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern, wie z. B. Anhydriden oder Aminen mit oder ohne Beschleunigern vernetzt werden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Geeignet sind ganz allgemein binäre und polynäre Mischungen (Polyblends) der vorgenannten Polymeren, wie z. B. PP/EPDM, Polyamid/EPDM oder ABS, PVC/EVA, PVC/ABS, PVC/MBS, PC/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Bevorzugt sind teilchen-, linien-, flächenförmige oder dreidimensionale Gebilde, die wenigstens ein polymeres Material umfassen, das ausgewählt ist unter Polyolefinen, Polyestern, Polyamiden, Polyacrylnitril, Polyaromaten, Styrol-Acrylnitril-Copolymeren (SAN), Acrylnitril-Butadien-Styrol-Copolymeren (ABS), Polyurethanen und Mischungen (Polyblends) der vorgenannten Polymeren.

Vorzugsweise handelt es sich bei den erfindungsgemäß eingesetzten Gebilden um Kunststofffasern insbesondere aus Polyolefinen, wie z. B. Polyethylen und Polypropylen, Polyestern, Polyacrylnitril und Polyamiden, wie z. B. Polyamid 6 und Polyamid 66.

Vorzugsweise handelt es sich bei den erfindungsgemäß eingesetzten Gebilden weiterhin um flächenförmige Gebilde und insbesondere um Filme oder Folien. Diese enthalten vorzugsweise ein Polymer, das ausgewählt ist unter Polyolefinen, wie Polyethylen und/oder Polypropylen, Polymeren halogenierter Monomerer, wie z. B. Polyvinylchlorid und/oder Polytetrafluorethylen, Polyestern und Mischungen davon.

Vorzugsweise handelt es sich bei dem erfindungsgemäß eingesetzten Gebilde weiterhin um einen Formkörper. Dieser umfasst vorzugsweise wenigstens ein polymeres Material, das ausgewählt ist unter Polyolefinen, wie z. B. Polyethylen und/oder Polypropylen, Polyaromaten, wie Polystyrol, Polymeren halogenierter Monomerer, wie Polyvinylchlorid und/oder Polytetrafluorethylen, Polyestern, Polyacrylnitril, Styrol-Acrylnitril-Copolymeren, Acrylnitril-Butadien-Styrol-Copolymeren, Polyamiden, wie Polyamid 6 und/oder Polyamid 66, Polyurethanen und Mischungen davon.

Erfindungsgemäß wird zur Modifizierung der Oberflächeneigenschaften wenigstens ein Polymer eingesetzt, das Urethan- und/oder Harnstoffgruppen sowie Ammoniumgruppen aufweist.

Bevorzugt sind Polymere, die
a) wenigstens ein Polyisocyanat und
b) wenigstens eine Verbindung mit mindestens zwei gegenüber Isocyanatgruppen reaktiven Gruppen und zusätzlich mindestens einer tertiären Aminogruppe
eingebaut enthalten. Dabei liegt im Polymer wenigstens ein Teil der tertiären Aminogruppen der Komponente b) in Form von Ammoniumgruppen vor. Geladene kationische Gruppen lassen sich aus den tertiären Aminstickstoffen der Verbindungen der Komponente b) und/oder des Polymers entweder durch Protonierung oder durch Quaternierung erzeugen. Im Polymer liegt dann wenigstens ein Teil der tertiären Aminogruppen in Form seiner Umsetzungsprodukte mit wenigstens einem Neutralisierungs-(Protonierungs-) und/oder Quaternierungsmittel vor. In einer besonders bevorzugten Ausführungsform handelt es sich bei dem Neutralisierungsmittel um Kohlensäure.

Die Polyisocyanate a) sind vorzugsweise ausgewählt unter Verbindungen mit 2 bis 5 Isocyanatgruppen, Isocyanatpräpolymeren mit einer mittleren Anzahl von 2 bis 5 Isocyanatgruppen und Mischungen davon. Geeignet sind weiterhin Verbindungen, die zusätzlich zu oder anstelle von freien Isocyanatgruppen funktionelle Gruppen aufweisen, welche Isocyanatgruppen freisetzen oder wie Isocyanatgruppen reagieren. Dazu zählen z. B. verkappte Isocyanatgruppen, Uretdiongruppen, Isocyanuratgruppen und/oder Biuretgruppen aufweisende Verbindungen. Bei den Isocyanuratgruppen aufweisenden Verbindungen handelt es sich insbesondere um einfache Triisocyanatoisocyanurate, d. h. cyclische Trimere von Diisocyanaten, oder um Gemische mit ihren höheren, mehr als einen Isocyanuratring aufweisenden Homologen. Biuretgruppen aufweisende Verbindungen können z. B. erhalten werden durch Addition von drei Molekülen Diisocyanat an ein Molekül Wasser. Verkappte Isocyanatgruppen entstehen bei der Umsetzung mit einem Blockierungsmittel, das beim Erhitzen der blockierten Isocyanatgruppen auf eine Temperatur, die mindestens der sogenannten Deblockierungstemperatur entspricht, die Isocyanatgruppen wieder freisetzt. Verbindungen, die Isocyanatgruppen blockieren (verkappen oder schützen) sind die üblichen, dem Fachmann bekannten. Dazu zählen z. B. Phenole, Caprolactam, Imidazole, Pyrazole, Pyrazoline, 1,2,4-Triazole, Diketopiperazine, Malonsäureester und Oxime.

Bevorzugt werden als Komponente a) aliphatische, cycloaliphatische und aromatische Diisocyanate eingesetzt. Geeignete aliphatische Diisocyanate weisen dann vorzugsweise einen Kohlenwasserstoffrest mit 4 bis 12 Kohlenstoffatomen auf. Geeignete cycloaliphatische und aromatische Diisocyanate weisen vorzugsweise einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen auf. Geeignete Diisocyanate sind z. B. Tetramethylendiisocyanat, Hexamethylendiisocyanat, 2,3,3-Trimethylhexamethylendiisocyanat, Dodecamethylendiisocyanat, 1,4-Cyclohexylendiisocyanat, Isophorondiisocyanat, Dicyclohexylmethandiisocyanat, 2,2-Bis-(4-isocyanatocyclohexyl)propan, 1,4-Phenylendiisocyanat, 2,4- und 2,6-Toluylendiisocyanat und deren Isomerengemische (z. B. 80 % 2,4- und 20 % 2,6-Isomer), 1,5-Naphthylendiisocyanat, 2,4- und 4,4'-Diphenylmethandiisocyanat, o- und m-Xylylendiisocyanat, 1,5-Naphthylendiisocyanat, Tetramethylxylylendiisocyanat, die Isomeren des Bis-(4-isocyanatocyclohexyl)methans, wie z. B. das trans/trans-, das cis/cis- und das cis/trans-Isomere sowie Gemische davon. Bevorzugt eingesetzte Diisocyanatgemische sind die Isomerengemische des Toluylendiisocyanats und Diphenylmethandiisocyanats und insbesondere ein Toluylendiisocyanat-Isomerengemisch aus etwa 80 % 2,4- und etwa 20 % 2,6-Isomer. Bevorzugt sind weiterhin Gemische, die wenigstens ein aromatisches und wenigstens ein aliphatisches und/oder cycloaliphatisches Diisocyanat umfassen. Dabei liegt das Mischungsverhältnis von aliphatischen und/oder cycloaliphatische zu aromatischen Diisocyanaten vorzugsweise in einem Bereich von etwa 4:1 bis 1:4. Besonders bevorzugt sind Mischungen, die 2,4- und/oder 2,6-Toluylendiisocyanat sowie Hexamethylendiisocyanat und/oder Isophorondiisocyanat enthalten. Ein geeignetes Triisocyanat ist z. B. Triphenylmethan-4,4',4''-triisocyanat. Weiterhin geeignet sind Isocyanatpräpolymere und Polyisocyanate, die durch Addition der zuvor genannten Diisocyanate an polyfunktionelle Hydroxyl- oder Amingruppen-haltige Verbindungen erhältlich sind. Dazu zählen z. B. die niedermolekularen Addukte von 3 Mol Diisocyanat, wie Hexamethylendiisocyanat, Isophorondiisocyanat etc. an dreiwertige Alkohole, wie z. B. Trimethylolpropan mit einem Molekulargewicht von in der Regel höchstens 400 g/Mol. Bevorzugt werden Hexamethylendiisocyanat, Isophorondiisocyanat und Mischungen davon eingesetzt.

Bevorzugt sind die gegenüber Isocyanatgruppen reaktiven Gruppen der Verbindungen der Komponente b) ausgewählt unter Hydroxylgruppen, primären und sekundären Aminogruppen und Thiolgruppen. In Abhängigkeit von diesen Gruppen resultieren Polymere, die Urethangruppen, Harnstoffgruppen und/oder Thiocarbamatgruppen aufweisen.

Geeignete Verbindungen b) sind z. B. tertiäre Amine, bei denen der Aminstickstoff drei Substituenten, die ausgewählt sind unter Hydroxyalkyl- und/oder Aminoalkylgruppen, aufweist. Geeignete Verbindungen b) sind weiterhin tertiäre Amine, bei denen der Aminstickstoff zwei Hydroxyalkyl- und/oder Aminoalkylgruppen und eine weitere Gruppe aufweist, die ausgewählt ist unter Alkyl, Cycloalkyl, Aryl und Aralkyl.

Bevorzugt umfasst die Komponente b) wenigstens eine Verbindung der allgemeinen Formeln 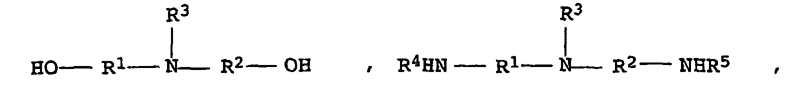 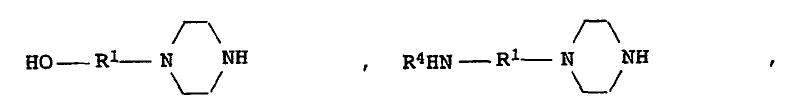 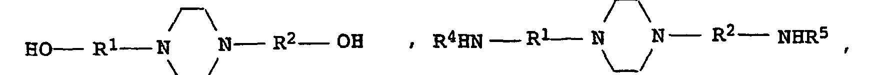 worin
- R¹ und R²,: die gleich oder verschieden sein können, für C₂-C₈-Alkylen stehen,
- R³: für C₁-C₆-Alkyl, Phenyl oder Phenyl-C₁-C₄-alkyl steht,
- R⁴ und R⁵,: die gleich oder verschieden sein können, für H oder C₁-C₆-Alkyl stehen.

Besonders bevorzugte Verbindungen b) sind Bis(aminopropyl)methylamin, Bis(aminopropyl)piperazin, Methyldiethanolamin und Mischungen davon.

Geeignete Verbindungen b) sind weiterhin Polyether, die wenigstens ein tertiäres Stickstoffatom und mindestens zwei gegenüber Isocyanatgruppen reaktive Gruppen, vorzugsweise zwei Hydroxylgruppen, aufweisen. Diese sind z. B. durch Alkoxilierung primärer Amine, wie z. B. Methylamin, oder durch Alkoxilierung von Diaminen, die primäre oder sekundäre Aminogruppen aufweisen, wie z. B. N,N'-Dimethylhydrazin, nach üblichen, dem Fachmann bekannten Verfahren erhältlich. Vorzugsweise liegt das zahlenmittlere Molekulargewicht der Polyether in einem Bereich von 500 bis 6000 g/Mol.

Die erfindungsgemäß eingesetzten Polymere können zusätzlich zu den Komponenten a) und b) weitere Komponenten eingebaut enthalten, wie sie zur Herstellung von Polyurethanen bzw. Polyharnstoffen üblich sind. Dazu zählen z. B. von der Komponente b) verschiedene Verbindungen mit mindestens zwei gegenüber Isocyanatgruppen reaktiven Gruppen, wie sie üblicherweise als Kettenverlängerer eingesetzt werden.

Bei den zusätzlichen Komponenten der Polymere handelt es sich bevorzugt um Diole, Diamine, Aminoalkohole, und Mischungen davon. Das Molekulargewicht dieser Verbindungen liegt vorzugsweise in einem Bereich von etwa 56 bis 500.

Bevorzugt werden als zusätzliche Komponente Diole eingesetzt. Brauchbare Diole sind z. B. Ethylenglykol, Propylenglykol, Butylenglykol, Neopentylglykol, Cyclohexandimethylol, Di-, Tri-, Tetra-, Penta- oder Hexaethylenglykol und Mischungen davon.

Geeignete zusätzliche Aminoalkohole sind z. B. 2-Aminoethanol, 2-(N-Methylamino)ethanol, 3-Aminopropanol, 4-Aminobutanol, 1-Ethylaminobutan-2-ol, 2-Amino-2-methyl-l-propanol, 4-Methyl-4-aminopentan-2-ol etc.

Geeignete zusätzliche Diamine sind z. B. Ethylendiamin, Propylendiamin, 1,4-Diaminobutan, 1,5-Diaminopentan und 1,6-Diaminohexan.

Geeignete Diamine sind auch Diamine der Formel R^{a}-NH-(CH₂)₂₋₃-NH₂, wobei R^{a} für C₈- bis C₂₂-Alkyl oder C₈- bis C₂₂-Alkenyl steht, wobei der Alkenylrest 1,2 oder 3 nicht benachbarte Doppelbindungen aufweisen kann. Das Molekulargewicht dieser Diamine liegt vorzugsweise in einem Bereich von etwa 160 bis 400.

Weiterhin geeignete Diamine, die üblicherweise als Kettenverlängerer eingesetzt werden, sind z. B. Hexamethylendiamin, Piperazin, 1,2-Diaminocyclohexan, 1,3-Diaminocyclohexan, 1,4-Diaminocyclohexan, Neopentandiamin, 4,4'-Diaminodicyclohexylmethan etc.

Die zuvor genannten zusätzlichen Komponenten können einzeln oder als Gemische eingesetzt werden. Vorzugsweise werden keine Kettenverlängerer eingesetzt.

Die erfindungsgemäß eingesetzten Polymere können zusätzlich wenigstens eine weitere Verbindung mit einer gegenüber Isocyanatgruppen reaktiven Gruppe (Abstopper) eingebaut enthalten. Bei dieser Gruppe handelt es sich vorzugsweise um eine Hydroxyl- oder eine primäre oder sekundäre Aminogruppe. Geeignete Verbindungen mit einer gegenüber Isocyanatgruppen reaktiven Gruppe sind z. B. monofunktionelle Alkohole, wie Methanol, Ethanol, n-Propanol, Isopropanol etc. Geeignet sind auch Amine mit einer primären oder sekundären Aminogruppe, wie z. B. Methylamin, Ethylamin, n-Propylamin, Isopropylamin, Dimethylamin, Diethylamin, Di-n-propylamin, Diisopropylamin etc. Geeignet sind auch Abstopper, die eine gegenüber Isocyanatgruppen reaktive Gruppe und wenigstens eine tertiäre Amino- und/oder Ammoniumgruppe aufweisen. Beispiele hierfür sind z. B. N,N-Dialkylaminoalkohole oder -amine.

Bevorzugt sind Polymere, die ein zahlenmittleres Molekulargewicht im Bereich von etwa 1000 bis 50000, bevorzugt 2000 bis 20000, aufweisen.

Bevorzugt weisen die Polymere einen Ammoniumgehalt von 0,1 bis 5 mol Ammonium/kg, bevorzugt 0,5 bis 3 mol/kg (Mol Säure/kg Polymer) auf.

Der Gehalt an Urethan- und/oder Harnstoffgruppen liegt in einem Bereich von 3 bis 8 mol/kg, insbesondere 4 bis 8 mol/kg.

Quartäre Gruppen lassen sich aus den tertiären Aminstickstoffen der Verbindungen der Komponente b) bzw. der Polymere, die die Komponente b) eingebaut enthalten, z. B. entweder durch Protonierung, z. B. mit Carbonsäuren, wie Milchsäure, oder Mineralsäuren, wie Phosphorsäure, Schwefelsäure und Salzsäure, oder durch Quaternierung, z. B. mit Alkylierungsmitteln, wie C₁-C₄-Alkylhalogeniden oder -sulfaten, Benzylhalogeniden etc. erzeugen. Beispiele solcher Alkylierungsmittel sind Ethylchlorid, Ethylbromid, Methylchlorid, Methylbromid, Dimethylsulfat und Diethylsulfat. Die Neutralisation und/oder Quaternierung kann je nach Anwendungszweck partiell, z. B. zu 10 bis 90 %, oder vollständig, d. h. zu 100 %, erfolgen. Die Neutralisation kann vor, während oder nach der Polyaddition erfolgen.

In einer besonders bevorzugten Ausführungsform verwendet man als Neutralisierungsmittel Kohlensäure. Die Kohlensäure kann als wässrige Lösung, als gasförmiges, festes oder flüssiges Kohlendioxid oder als Hydrogencarbonat, insbesondere als Hydrogencarbonat mit einwertigen Gegenkationen, wie Alkalimetallkationen, z. B. Natrium, Kalium, Lithium oder Gemischen davon, eingesetzt werden. Vorzugsweise setzt man die Kohlensäure in Form von Kohlendioxid ein. Die Zugabe des Kohlendioxids kann unter Normaldruck oder Überdruck von z. B. bis zu 100 bar erfolgen. Wird die wässrige Lösung des neutralisierten Polymers von einem Co-Lösungsmittel befreit, das z. B. bei der Polyaddition als Lösungsvermittler diente, so erfolgt die Lösungsmittelabtrennung zweckmäßigerweise unter kontinuierlicher Zufuhr von Kohlensäure, insbesondere in Form von Kohlendioxid.

Es hat sich gezeigt, dass Polymere, worin wenigstens ein Teil der tertiären Aminogruppen in Form ihrer Umsetzungsprodukte mit Kohlensäure vorliegen, eine besonders gute hydrophilierende Wirkung aufweisen und außerdem eine hohe Permanenz zeigen, d. h. die Polymere werden im Kontakt mit wässrigen Lösungsmitteln nicht oder nur langsam von Oberflächen ausgewaschen, die mit den Polymeren behandelt worden sind.

Ein weiterer Gegenstand der Erfindung ist ein Polymer, bestehend aus
a) wenigstens einem Polyisocyanat und
b) wenigstens einer Verbindung mit mindestens zwei gegenüber Isocyanatgruppen reaktiven Gruppen und mindestens einer tertiären Aminogruppe,
in eingebauter Form, worin wenigstens ein Teil der tertiären Aminogruppen in Form ihrer Umsetzungsprodukte mit wenigstens einem Neutralisierungs- und/oder Quaternierungsmittel vorliegt.

Die Herstellung der erfindungsgemäß eingesetzten und der erfindungsgemäßen Polymere erfolgt durch Umsetzung wenigstens eines Polyisocyanats a) mit wenigstens einer Verbindung der Komponente b) sowie gegebenenfalls zusätzlichen Verbindungen mit gegenüber Isocyanatgruppen reaktiven Gruppen. Dabei liegt das Verhältnis von NCO-Äquivalent der Komponente a) zu Äquivalent aktives wasserstoffatom der Komponenten b) und gegebenenfalls zusätzlicher Verbindungen im Allgemeinen in einem Bereich von etwa 0,6:1 bis 1,4:1, bevorzugt 0,9:1 bis 1,1:1, insbesondere 0,9:1 bis 1:1. Die Reaktion kann ohne Lösungsmittel oder in einem geeigneten inerten Lösungsmittel oder Lösungsmittelgemisch erfolgen. Bevorzugt sind Lösungsmittel, die mit Wasser unbegrenzt mischbar sind. Bevorzugt sind weiterhin Lösungsmittel, die einen Siedepunkt bei Normaldruck im Bereich von etwa 40 bis 100 °C aufweisen. Geeignet sind aprotisch polare Lösungsmittel, z. B. Tetrahydrofuran, Essigsäureethylester, N-Methylpyrrolidon, Dimethylformamid, Dimethylacetamid und bevorzugt Ketone, wie Aceton und Methylethylketon. Gewünschtenfalls kann die Reaktion unter einer Inertgasatmosphäre, wie z. B. unter Stickstoff, erfolgen. Des Weiteren erfolgt die Reaktion vorzugsweise bei Umgebungsdruck oder unter erhöhtem Druck, insbesondere dem Eigendruck der Reaktanten unter den Reaktionsbedingungen. Die Reaktionstemperatur liegt vorzugsweise in einem Bereich von etwa 5 bis 180 °C, insbesondere 20 bis 150 °C. Werden als Komponente b) sowie gegebenenfalls als zusätzliche Komponenten überwiegend Verbindungen eingesetzt, die als gegenüber Isocyanatgruppen reaktiven Gruppen primäre und/oder sekundären Aminogruppen aufweisen, so kann die Reaktion gewünschtenfalls in einem Lösungsmittel oder Lösungsmittelgemisch erfolgen, welches aktive Wasserstoffatome aufweisen kann. Neben den zuvor genannten werden dann bevorzugt Alkohole wie Methanol und Ethanol, Gemische aus Alkoholen und Wasser, Gemische aus Ketonen und Wasser sowie Gemische aus Alkoholen und den zuvor genannten Ketonen eingesetzt. Weisen die resultierenden Polymere noch freie Isocyanatgruppen auf, so können diese abschließend inaktiviert werden. Die Reaktionszeit kann in einem Bereich von wenigen Minuten bis zu einigen Stunden liegen. Die Reaktion kann in Gegenwart üblicher Katalysatoren, wie z. B. Dibutylzinndilaurat, Zinn(II)octoat oder Diazabicyclo[2.2.2]octan durchgeführt werden. Geeignete Polymerisationsapparate sind dem Fachmann bekannt. Dazu zählen z. B. Rührkessel, die gewünschtenfalls mit vorrichtungen zur Abfuhr der Reaktionswärme ausgestattet sind. Wird bei der Herstellung der Polymeren ein organisches Lösungsmittel eingesetzt, so kann dieses im Anschluss durch übliche, dem Fachmann bekannte Verfahren, z. B. durch Destillation bei vermindertem Druck, entfernt werden. Vor dem Abtrennen des Lösungsmittels kann dem Polymer zusätzlich Wasser zugegeben werden. Schwersiedende Lösungsmittel können gewünschtenfalls auch in der Lösung verbleiben, wobei deren Anteil jedoch vorzugsweise nicht mehr als 10 Gew.-%, bezogen auf das Gewicht des Polymers, betragen soll.

Die Polymere können in Mischungen oder in Kombination mit oberflächenaktiven Substanzen, wie z. B. anionischen, nichtionischen oder kationischen Tensiden bzw. Netzmitteln, eingesetzt werden. Sie können auch in Mischung mit weiteren Polymeren eingesetzt werden, wobei dadurch unter Umständen noch eine Verstärkung der oberflächenmodifizierenden Wirkung erzielt werden kann.

Die erfindungsgemäßen und erfindungsgemäß eingesetzten Polymere mit Urethan- und/oder Harnstoffgruppen und Ammoniumgruppen eignen sich in vorteilhafter Weise zur Modifizierung der Oberflächeneigenschaften teilchen-, linien-, flächenförmiger oder dreidimensionaler Gebilde. Der Begriff "Modifizierung der Oberflächeneigenschaften" wird im Rahmen der vorliegenden Erfindung weit verstanden. Dazu zählt vor allem die Hydrophilierung, worunter in der Regel eine Verbesserung der Benetzbarkeit mit Wasser bzw. einer wässrigen Flüssigkeit verstanden wird. Eine verbesserte Benetzbarkeit geht in der Regel einher mit einer schnelleren und/ oder vermehrten Flüssigkeitsaufnahme und/oder einer verbesserten Flüssigkeitsretention, im Allgemeinen auch unter Druck. Zur "Modifizierung von Oberflächen" gehört erfindungsgemäß aber auch eine Verbesserung der Baftungswirkung, eine verbesserte antistatische Wirkung, eine Antibeschlagwirkung, verbesserte Trageeigenschaften, z. B. bei Hygieneprodukten, und/oder ein verbesserter Griff.

Die erfindungsgemäßen Gebilde eignen sich im Allgemeinen vorteilhaft für alle Einsatzbereiche, bei denen Wasser oder wässrige Flüssigkeiten mit in unmodifiziertem Zustand im Wesentlichen hydrophoben Materialien in Kontakt kommen. Dazu zählt insbesondere das rasche Aufsaugen und/oder der rasche Transport von Wasser in an sich hydrophobe Materialien. Die erfindungsgemäßen Gebilde sind weiterhin im Allgemeinen dort vorteilhaft einsetzbar, wo durch Modifizierung von Oberflächen im Sinne einer Hydrophilierung verbesserte Hafteigenschaften, verbesserte antistatische Eigenschaften, verbesserte Antibeschlageigenschaften, ein verbesserter Griff und/oder ein verbesserter Tragekomfort erreicht werden kann.

Die erfindungsgemäßen Gebilde eignen sich vorteilhaft in oder als Synthesefasern, Geweben, Gewirken, Vliesstoffen, Filzen, Textilverbundstoffen, wie z. B. Teppichen, kaschierten und laminierten Textilien etc. Sie eignen sich weiterhin in vorteilhafter Weise für den Einsatz in Windeln, Hygieneeinlagen, Putz- und Wischtüchern, Spültüchern, Servietten, Landwirtschafts- und/oder Geotextilien sowie für Filteranwendungen.

Die erfindungsgemäßen und erfindungsgemäß eingesetzten Polymere sind als Hydrophiliermittel für die oben genannten Materialien, insbesondere für Synthesefasern, beispielsweise solche aus Polyethylen, Polypropylen, Polyestern, Polyacrylnitril und Polyamiden geeignet. Außerdem eignen sich die Polymere zur Verbesserung der Bedruckbarkeit und Klebbarkeit von Filmen und Folien, beispielsweise solchen aus Polyethylen, Polypropylen, Polyvinylchlorid, Polytetrafluorethylen und Polyestern.

Außerdem lassen sich die antistatischen Eigenschaften von Filmen und Folien durch Verwendung der Polymere verbessern.

Die Verwendung der Polymere führt bei Formkörpern ebenfalls zu einer Verbesserung der Oberflächeneigenschaften, so dass diese besser bedruckbar oder beklebbar sind und bessere antistatische Eigenschaften besitzen. Typische Formkörper sind beispielsweise aus Polyethylen, Polypropylen, Polystyrol, Polyvinylchlorid, Polytetrafluorethylen, Polyestern, Polyacrylnitril, Styrol-Acrylnitril-Copolymeren (SAN), Acrylnitril-Butadien-Styrol-Terpolymeren (ABS), Polyamiden, wie Polyamid 6 oder Polyamid 6,6, Polyurethanen und/oder Mischungen der vorgenannten Kunststoffe aufgebaut.

Außerdem führt die Verwendung von Polymeren mit Urethan- und/oder Harnstoffgruppen und Ammoniumgruppen zu einer Verbesserung der Oberflächenleitfähigkeit von hydrophoben, nichtleitenden Materialien, insbesondere den vorgenannten Kunststoffen, und verbessert damit deren antistatische Eigenschaften. Ferner sind die Polymere geeignet, die Beschlagsneigung von Kunststofffolien zu reduzieren.

Der Vorteil der erfindungsgemäßen Mittel gegenüber bekannten Hydrophiliermitteln liegt außerdem darin, dass sie nicht zu einer nennenswerten Herabsetzung der Oberflächenspannung von Wasser führen.

Die Ausrüstung der erfindungsgemäßen teilchen-, linien-, flächenförmigen oder dreidimensionalen Gebilde mit den Polymeren kann nach den Verfahren erfolgen, wie man sie üblicherweise zur Hydrophilierung der vorgenannten Gebilde mit Hydrophiliermitteln des Standes der Technik anwendet. Üblicherweise behandelt man hierzu das Gebilde mit einer verdünnten, vorzugsweise wässrigen Lösung des Polymers in einer für die Art des Gebildes üblichen Weise, z. B. durch Spülen, Tauchen, Besprühen, Bepflatschen oder ähnlichen Methoden, wie sie üblicherweise bei der Ausrüstung von textilen Geweben oder Folien eingesetzt werden. Der Polymergehalt der Lösungen liegt in der Regel im Bereich von wenigstens 0,01 bis 20 Gew.-% und vorzugsweise 0,1 bis 10 Gew.-%, bezogen auf das Gewicht der Lösung. Vorzugsweise setzt man zur Behandlung wässrige Lösungen der Polymere ein. Die zur Hydrophilierung erforderliche Menge an Polymer wird von der Oberfläche absorbiert und verbleibt nach dem Trocknen auf ihr haften. Die zur Erzielung einer wirksamen Hydrophilierung erforderlichen Mengen stellen sich dabei automatisch ein und sind äußerst gering. Bei Gebilden mit glatter Oberfläche wie Folien und ähnlichen Gebilden reichen bereits 0,1 mg/m² Polymer aus.

In einer anderen Ausgestaltung des erfindungsgemäßen Verfahrens zur Hydrophilierung von Oberflächen kann man das Polymer auch dem Werkstoff, aus dem das Gebilde aufgebaut ist, zusetzen und anschließend hieraus das Gebilde herstellen. Beispielsweise kann man bei Ausrüstung von thermoplastischen Kunststoffen das Polymer als Feststoff mit dem Kunststoffmaterial kompoundieren. Das so ausgerüstete Kunststoffmaterial wird dann nach den üblichen Verfahren zu Folien, beispielsweise durch Extrusion, oder zu Fasermaterialien, beispielsweise durch ein Schmelzspinnverfahren, weiter verarbeitet.

Die einfache Anwendbarkeit der erfindungsgemäßen und erfindungsgemäß eingesetzten Polymere erlaubt den Einsatz in vielen Anwendungsbereichen, beispielsweise als Hydrophiliermittel für Vliesstoffe, die z. B. in Windeln, Hygieneeinlagen, Textilien, Landwirtschafts- oder Geotextilien oder Filteranlagen eingesetzt werden. Die mit den Polymeren ausgerüsteten Kunststofffasern können ihrerseits zu Textilien weiterverarbeitet werden. Durch die Hydrophilierung wird in der Regel auch die Wasserdampfdurchlässigkeit und der Kapillartransport von Schweiß verbessert sowie das Anschmutzverhalten gegenüber vielen hydrophoben Schmutzarten verringert. Außerdem wird die Wiederablösbarkeit von Schmutz positiv beeinflusst. Weiterhin kann man die Polymere als Antistatikausrüstung für Kunststoff folien oder Siliziumwafer verwenden.

Ein geeignetes Maß zur Beurteilung der Hydrophilie/Hydrophobie der Oberfläche eines teilchen-, linien-, flächenförmigen oder dreidimensionalen Gebildes ist die Messung des Randwinkels von Wasser an der jeweiligen Oberfläche (siehe z. B. Römpp, Chemielexikon, 9. Auflage, S. 372 "Benetzung", Georg Thieme Verlag (1995)). Dabei spricht man in der Regel von hydrophoben Oberflächen, wenn der Kontaktwinkel von Wasser größer als 90° ist. Bevorzugt bewirkt der Einsatz wenigstens eines Polymers mit Urethanund/oder Harnstoffgruppen und Ammoniumgruppen eine Abnahme des Randwinkels um mindestens 10°, bevorzugt um mindestens 30°, gegenüber der unmodifizierten hydrophoben Oberfläche.

Vorteilhafterweise werden bei den erfindungsgemäßen Gebilden, die aus dem Stand der Technik bekannten nachteiligen Auswirkungen auf die Grenzflächenspannung von wässrigen Lösungen sowie eine erhöhte Migrationsneigung in der Regel nicht beobachtet.

Vorteilhafterweise zeichnen sich die erfindungsgemäß eingesetzten Polymere sowie mit ihnen oberflächenmodifizierte Gebilde durch eine besonders gute Verträglichkeit mit Polymerschmelzen aus. Sie eignen sich somit in der Regel auch als Additive zu einer Schmelze von polymeren Faser- bzw. Formkörperrohstoffen. Die Polymere können jedoch auch als Nachbehandlungsmittel zur Modifizierung der Gebilde eingesetzt werden.

Die Erfindung wird anhand der folgenden nichteinschränkenden Beispiele näher erläutert.

### Beispiele

### I. Messmethoden

### I.1 Randwinkelmessung

Das jeweilige Substrat wird mit einer 0,5 gew.-%igen Lösung des Polymers 30 Minuten bei 21 °C unter Rühren behandelt. Die Probe wird dann geteilt. Eine Hälfte wird unmittelbar nach der Behandlung getrocknet (RW1), die andere Hälfte wird ca. 1 Sekunde in destilliertes Wasser getaucht und dann getrocknet (RW2). An beiden Proben wurden die Randwinkel mit destilliertem Wasser bei Raumtemperatur bestimmt.

### 1.2 Messung der Hydrophilie

### Methode A

Die Messung erfolgte an einem Polypropylenvlies. Hierzu wird das Vlies mit einer wässrigen, 0,5 gew.-%igen Lösung des Polymers behandelt und anschließend getrocknet. Auf das zu messende Substrat wird ein Tropfen Wasser aufgesetzt. Die Benetzung des Vlieses durch das Wasser wird visuell mittels einer Punkteskala von 1 bis 10 beurteilt. Hierbei bedeuten 0 Punkte keine Benetzung und 10 Punkte ein sofortiges Zerlaufen des Tropfens.

### Methode B

Das Vlies wurde vorbehandelt wie unter Methode A beschrieben. Auf das Vlies wurden neun Tropfen Wasser aufgebracht. Die verstrichene Zeit, bis die Tropfen vollständig in das Vlies eingezogen waren, wurde bestimmt.

### I.3 Bestimmung der Oberflächenspannung

Die Messung erfolgte an 100 ml einer wässrigen, 0,5 gew.-%igen Lösung des Polymers mittels eines Tensiometers der Fa. Lauda Modell TE1C.

### 1.4 Bestimmung der Affinität durch Reflektometrie

Wie von J.C. Dijt et al., Colloids Surf. 51 (1990) 141, beschrieben, wird ein Polypropylenfilm, der auf einem Siliziumwafer aufgebracht wurde, mit einer wässrigen Polymerlösung in Kontakt gebracht. Durch Analyse der Polarisationsrichtung eines reflektierten Laserstrahls kann die adsorbierte Menge in situ bestimmt werden.

### II. Herstellungsbeispiele

### Herstellungsbeispiel 1: Polyharnstoff aus Isophorondiisocyanat und Bis(aminopropyl)piperazin - Neutralisation mit Salzsäure

In einem Vierhalskolben, der mit Rührer, Tropftrichter, Thermometer und Rückflusskühler ausgestattet war, wurden 20,0 g (0,1 Mol) Bis(aminopropyl)piperazin in 200 g Aceton gelöst. Dazu wurden 22,2 g (0,1 Mol) Isophorondiisocyanat so zugetropft, dass die Temperatur nicht über 30 °C stieg. Das Reaktionsgemisch wurde eine weitere Stunde am Rückfluss gerührt und anschließend 110 g HCl (1 n) und 100 g Wasser zugegeben. Anschließend wurde das Aceton unter vermindertem Druck abdestilliert. Man erhielt eine Polyharnstofflösung mit einem Feststoffgehalt von 16,7 Gew.-% und einem pH-Wert von 7,2. Der Ammoniumgehalt des Polymeren betrug 2,61 mol/kg. Der Harnstoffgehalt des Polymeren betrug 4,74 mol/kg.

Herstellungsbeispiel 2: Polyharnstoff aus Isophorondiisocyanat und Bis(aminopropyl)methylamin - Neutralisation mit Salzsäure

Analog der Herstellungsvorschrift für den Polyharnstoff 1 wurde ein Polyharnstoff aus 14,5 g (0,1 Mol) Bis(aminopropyl)methylamin und 22,2 g (0,1 Mol) Isophorondiisocyanat hergestellt. Man erhielt eine Polyharnstofflösung mit einem Feststoffgehalt von 25,5 Gew.-% und einem pH-Wert von 7,7. Der Ammoniumgehalt des Polymeren betrug 2,72 mol/kg. Der Harnstoffgehalt des Polymeren betrug 5,45 mol/kg.

### Herstellungsbeispiel 3: Polyurethan aus Isophorondiisocyanat und Methyldiethanolamin - Neutralisation mit Salzsäure

In einem Vierhalskolben, der mit Rührer, Tropftrichter, Thermometer und Rückflusskühler ausgestattet war, wurden 11,92 g (0,1 Mol) Methyldiethanolamin in 200 g Aceton gelöst. Dazu wurden 22,2 g (0,1 Mol) Isophorondiisocyanat so zugetropft, dass die Temperatur nicht über 30 °C stieg. Das Reaktionsgemisch wurde weitere 8 Stunden am Rückfluss gerührt. Anschließend gab man 100 g HCl (1 n) zu und destillierte das Aceton unter vermindertem Druck ab. Man erhielt eine Polyurethanlösung mit einem Feststoffgehalt von 29,7 Gew.-% und einem pH-Wert von 7,2. Der Ammoniumgehalt des Polymeren betrug 2,93 mol/kg. Der Urethangehalt des Polymeren betrug 5,86 mol/kg.

### Herstellungsbeispiel 4: Polyharnstoff aus Isophorondiisocyanat und Bis(aminopropyl)methylamin - Neutralisation mit Salzsäure

In einem Vierhalskolben, der mit Rührer, Tropftrichter, Thermometer und Rückflusskühler ausgestattet war, wurden 174 g (1,2 Mol) Bis(aminopropyl)methylamin in 1200 g Aceton gelöst und mit 1140 g HCl (1 n) neutralisiert. Zu diesem Reaktionsgemisch wurde innerhalb von 20 Minuten 266,4 g (1,2 Mol) Isophorondiisocyanat getropft. Das Reaktionsgemisch wurde eine weitere Stunde am Rückfluss gerührt und anschließend das Aceton unter vermindertem Druck abdestilliert. Man erhielt eine Polyharnstofflösung mit einem Feststoffgehalt von 36,3 Gew.-% und einem pH-Wert von 7,3. Der Ammoniumgehalt des Polymeren betrug 2,59 mol/kg. Der Harnstoffgehalt des Polymeren betrug 5,45 mol/kg.

### Herstellungsbeispiel 5: Polyharnstoff aus Hexamethylendiisocyanat und Bis(aminopropyl)methylamin - Neutralisation mit Salzsäure

Analog zu Polyharnstoff 4 wurde ein Polyharnstoff aus 7,25 g (0,05 Mol) Bis(aminopropyl)methylamin und 8,41 g (0,05 Mol) Hexamethylendiisocyanat hergestellt. Man erhielt eine Polyharnstofflösung mit einem Feststoffgehalt von 40,3 Gew.-% und einem pH-Wert von 7,4. Der Ammoniumgehalt des Polymeren betrug 3,19 mol/kg. Der Harnstoffgehalt des Polymeren betrug 6,39 mol/kg.

### Herstellungsbeispiel 6: Polyharnstoff aus Isophorondiisocyanat und Bis(aminopropyl)methylamin - Neutralisation mit Milchsäure

In einem Vierhalskolben, der mit Rührer, Tropftrichter, Thermometer und Rückflusskühler ausgestattet war, wurden 29,0 g (0,2 Mol) Bis(aminopropyl)methylamin in einer Mischung aus 180 g Wasser, 200 g Aceton und 20 g 90%iger Milchsäure gelöst. Dazu wurde über einen Zeitraum von 20 Minuten 44,4 g (0,2 Mol) Isophorondiisocyanat getropft. Das Reaktionsgemisch wurde eine weitere Stunde am Rückfluss gerührt und anschließend das Aceton unter vermindertem Druck abdestilliert. Man erhielt eine Polyharnstofflösung mit einem Feststoffgehalt von 36,4 Gew.-%. Der Ammoniumgehalt des Polymeren betrug 2,72 mol/kg. Der Harnstoffgehalt des Polymeren betrug 5,45 mol/kg.

### Herstellungsbeispiel 7: Polyharnstoff aus Isophorondiisocyanat und Bis(aminopropyl)methylamin - Neutralisation mit Kohlensäure

In einem Vierhalskolben, der mit Rührer, Tropftrichter, Thermometer und Rückflusskühler ausgestattet war, wurden 106,32 g (0,733 mol) Bis(aminopropyl)methylamin und 770 g Wasser bei Raumtemperatur vorgelegt. In diese Lösung wurde mit einem Strom von 4 1/h 60 min lang Kohlendioxid eingeleitet. Dann fügte man 631 g Aceton hinzu, erwärmte das Reaktionsgemisch auf 46 °C und tropfte innerhalb von 40 min 162,8 g (0,733 mol) Isophorondiisocyanat zu. Nach zweistündigem Rühren bei 50 °C wurde das Aceton unter vermindertem Druck abdestilliert, wobei weiter Kohlendioxid mit 4 1/h eingeleitet wurde. Man erhielt eine Polyharnstofflösung mit einem Feststoffgehalt von 25,5 Gew.-% und einem pH-Wert von 7,8.

### III. Anwendungstechnische Beispiele

### III.1 Messung des Randwinkels

Die Messung des Randwinkels erfolgte wie zuvor beschrieben. Die Ergebnisse sind in der folgenden Tabelle 1 wiedergegeben.

**Tabelle 1:**

| Beispiel-Nr. | Additiv | Randwinkel RW1 |
|---|---|---|
| 1 (Vergleich) | kein Additiv | 105° |
| 2 (Vergleich) | handelsübliches Alkoholethoxilat | 58° |
| 3 (Vergleich) | handelsüblicher, hydrophilierend wirkender Polyetherester | 86° |
| 4 | Herstellungsbeispiel 1 | 9° |
| 5 | Herstellungsbeispiel 2 | 7° bzw. 11° *) |
| 6 | Herstellungsbeispiel 3 | 10° |
| 7 | Herstellungsbeispiel 4 | 6° |
| 8 | Herstellungsbeispiel 5 ' | 22° |
| 9 | Herstellungsbeispiel 6 | 7° bzw. 20° *) |
| 10 | Herstellungsbeispiel 7 | 10° |

| | | |
|---|---|---|
| *) beim Wiederholungsversuch gemessene Werte | | |

Die RW2-Werte unterscheiden sich bei den erfindungsgemäßen Polymeren nicht signifikant von den RW1-Werten. Damit ist gezeigt, dass der Hydrophiliereffekt auch eine Spülung mit Wasser überdauert.

### III.2 Messung der Hydrophilie

Die Messung der Hydrophilie erfolgte wie zuvor beschrieben. Die Ergebnisse sind in den folgenden Tabellen 2 und 3 wiedergegeben.

**Tabelle 2:**

| Methode A | | |
|---|---|---|
| Beispiel-Nr. | Additiv | Hydrophilie |
| 11 (Vergleich) | kein Additiv | 0 |
| 12 (Vergleich) | handelsüblicher, hydrophilierend wirkender Polyetherester | 3 |
| 13 | Herstellungsbeispiel 1 | 9 |
| 14 | Herstellungsbeispiel 2 | 10 |
| 15 | Herstellungsbeispiel 3 | 9 |
| 16 | Herstellungsbeispiel 4 | 9 |
| 17 | Herstellungsbeispiel 5 | 7 |
| 18 | Herstellungsbeispiel 6 | 10 |

**Tabelle 3:**

| Methode B | | | | |
|---|---|---|---|---|
| Beispiel-Nr. | Additiv | Anzahl der Tropfen eingezogen | | |
| | | sofort | nach 10 s | nach 60 s |
| 19 | kein Additiv | 0 | 0 | 9 |
| 20 | handelsübliches hydrophilierend wirkendes Tensid | 0 | 2 | 7 |
| 21 | Herstellungsbeispiel 6 | 7 | 2 | 0 |
| 22 | Herstellungsbeispiel 2 8 | | 0 | 1 |
| 23 | Herstellungsbeispiel 7 9 | 9 | 0 | 0 |

### III.3 Bestimmung der Oberflächenspannung

Die Messung der Oberflächenspannung erfolgte wie zuvor beschrieben. Die Ergebnisse sind in Tabelle 4 wiedergegeben.

**Tabelle 4:**

| Beispiel-Nr. | Additiv | Oberflächenspannung [mN/m] |
|---|---|---|
| 24 (Vergleich) | handelsübliches, hydrophilierend wirkendes Tensid | 20 |
| 25 (Vergleich) | kein Additiv | 72 |
| 26 | Herstellungsbeispiel 6 | 58 |
| 27 | Herstellungsbeispiel 2 | 58 |
| 28 | Herstellungsbeispiel 7 | 54 |

### III.4 Bestimmung der Affinität

### Beispiel 29:

Eine 0,05 gew.-%ige Lösung des Polymers aus Herstellungsbeispiel 1 wurde auf einen pH-Wert von 5 eingestellt. Anschließend wurde ein Polypropylen-modifizierter Siliziumwafer bei Raumtemperatur mit der so erhaltenen Lösung mit einer Flussrate von 0,7 ml/min senkrecht angeströmt. Durch die Absorption des Polymeren wird eine Veränderung des Detektionssignals gegenüber dem polymerfreien Lösungsmittel beobachtet. Durch eine computergestützte Modellierung des Strahlengangs erhält man aus dieser Veränderung eine Belegung von 0,7 mg/m². Diese Belegung nimmt nicht wesentlich ab, wenn man wieder polymerfreies Lösungsmittel an die Oberfläche strömen lässt.

Weitere Ergebnisse sind in der folgenden Tabelle 5 zusammengefasst. Man verwendete 0,01 gew.-%ige Lösungen der Polymere aus den Herstellungsbeispielen 6, 2 und 7, die auf einen pH-Wert von 7 eingestellt worden waren.

**Tabelle 5:**

| Beispiel-Nr. | Additiv | Beobachtung |
|---|---|---|
| 30 | handelsübliches Polycarboxylat | wird durch Wasser wieder abgespült |
| 31 | Herstellungsbeispiel 6 | bleibt beim Spülen mit Wasser auf der PP-Schicht |
| 32 | Herstellungsbeispiel 2 | " |
| 33 | Herstellungsbeispiel 7 | " |

Die anwendungstechnischen Beispiele zeigen, dass es mit den erfindungsgemäßen und erfindungsgemäß eingesetzten Polymeren möglich ist, Polypropylen-Oberflächen effektiv zu hydrophilieren. Dabei zeigt keines der erfindungsgemäßen Beispiele ein signifikantes Schäumvermögen, wohingegen das als Vergleichssubstanz eingesetzte handelsübliche Alkoholethoxilat, wie die üblichen aus dem Stand der Technik bekannten nichtionischen Tenside, ein starkes bis sehr starkes Schäumvermögen zeigt. weiterhin wird bei Einsatz der Polymere keine signifikante Herabsetzung der Oberflächenspannung einer wässrigen Lösung beobachtet, wohingegen das als Vergleichssubstanz eingesetzte Alkoholethoxilat, wie auch ganz allgemein die aus dem Stand der Technik bekannten und als Hydrophiliermittel eingesetzten Tenside, die Oberflächenspannung stark herabsetzt. Die Polymere verbleiben auch beim Spülen mit Wasser auf den behandelten Oberflächen, während ein als Vergleichssubstanz eingesetztes Polycarboxylat abgespült wird.

## Patentansprüche

1. Teilchen-, linien-, flächenförmiges oder dreidimensionales Gebilde, enthaltend zumindest auf seiner Oberfläche eine hydrophilierend wirkende Menge wenigstens eines Polymers, das Urethan- und/oder Harnstoffgruppen sowie Ammoniumgruppen aufweist, wobei der Gehalt an Urethan - und/oder Harnstoffgruppen in einem Bereich von 3 bis 8 mol/kg liegt.

2. Gebilde nach Anspruch 1 in Form eines linien- oder flächenförmigen textilen Gebildes.

3. Gebilde nach Anspruch 2, worin das textile Gebilde aus Kunststofffasern aufgebaut ist.

4. Gebilde nach Anspruch 1 in Form einer Kunststofffolie oder eines Kunststoffformkörpers.

5. Gebilde nach einem der vorhergehenden Ansprüche, wobei das Polymer
a) wenigstens ein Polyisocyanat und
b) wenigstens eine Verbindung mit mindestens zwei gegenüber Isocyanatgruppen reaktiven Gruppen und zusätzlich mindestens einer tertiären Aminogruppe,
eingebaut enthält, worin wenigstens ein Teil der tertiären Aminogruppen in Form ihrer umsetzungsprodukte mit wenigstens einem Neutralisierungs- und/oder Quaternierungsmittel vorliegt.

6. Gebilde nach Anspruch 5, wobei es sich bei dem Neutralisierungsmittel um Kohlensäure handelt.

7. Polymer, bestehend aus
a) wenigstens einem Polyisocyanat und
b) wenigstens einer Verbindung mit mindestens zwei gegenüber Isocyanatgruppen reaktiven Gruppen und mindestens einer tertiären Aminogruppe,
in eingebauter Form, worin wenigstens ein Teil der tertiären Aminogruppen in Form ihrer Umsetzungsprodukte mit wenigstens einem Neutralisierungs- und/oder Quatemierungsmittel vorliegt, wobei der Gehalt an Urethan *-* und/oder Harnstoffgruppen in einem Bereich von 3 bis 8 mol/kg liegt.

8. Polymer nach Anspruch 7, wobei es sich bei dem Neutralisierungsmittel um Kohlensäure handelt.

9. Verwendung von Polymeren, die
a) wenigstens ein Polyisocyanat und
b) wenigstens eine Verbindung mit mindestens zwei gegenüber Isocyanatgruppen reaktiven Gruppen und zusätzlich mindestens einer tertiären Aminogruppe,
eingebaut enthalten, worin wenigstens ein Teil der tertiären Aminogruppen in Form ihrer Umsetzungsprodukte mit wenigstens einem Neutralisierunga- und/oder Quaternierungsmittel vorliegt und wobei der Gehalt an Urethan - und/oder Harnstoffgruppen in einem Bereich von 3 bis 8 mol/kg liegt, zur Modifizierung der Oberflächeneigenschaften fester Stoffe.

10. Verwendung nach Anspruch 9, wobei es sich bei dem Neutralisierungsmittel um Kohlensäure handelt.

11. Verfahren zur Modifizierung der Oberflächeneigenschaften teilchen-, linien-, flächenförmiger oder dreidimensionaler Gebilde, bei dem man auf die Oberfläche davon eine wirksame Menge eines Polymers aufbringt, das
a) wenigstens ein Polyisocyanat und
b) wenigstens eine Verbindung mit mindestens zwei gegenüber Isocyanatgruppen reaktiven Gruppen und zusätzlich mindestens einer tertiären Aminogruppe,
eingebaut enthält, worin wenigstens ein Teil der tertiären Aminogruppen in Form ihrer Umsetzungsprodukte mit wenigstens einem Neutralisierungs- und/oder Quaternierungsmittel vorliegt und wobei der Gehalt an Urethan- und/oder Harnstoffgruppen in einem Bereich von 3 bis 8 mol/kg liegt.

12. Verfahren zur Modifizierung der Oberflächeneigenschaften teilchen-, linien-, flächenförmiger oder dreidimensionaler Gebilde, bei dem man den Werkstoff, aus dem das Gebilde besteht, mit einer wirksamen Menge eines Polymers, das
a) wenigstens ein Folyisocyanat und
b) wenigstens eine Verbindung mit mindestens zwei gegenüber Isocyanatgruppen reaketiven Gruppen und zusätzlich mindestens einer tertiären Aminogruppe,
eingebaut enthält, worin wenigstens ein Teil der tertiären Aminogruppen in Form ihrer Umsetzungsprodukte mit wenigstens einem Neutralisierungs- und/oder Quaternierungsmittel vorliegt und wobei der Gehalt an Urethan - und/oder Harnstoffgruppen in einem Bereich von 3 bis 8 mol/kg liegt, modifiziert und hieraus das Gebilde herstellt.

13. Verfahren nach Anspruch 11 oder 12, wobei es sich bei dem Neutralisierungsmittel um Kohlensäure handelt.

## Claims

1. A particulate, linear, sheet-like, or three-dimensional structure comprising, at least on its surface, a hydrophilicizing amount of at least one polymer which has urethane groups and/or urea groups, and also ammonium groups, where the content of urethane groups and/or urea groups is in the range from 3 to 8 mol/kg.

2. A structure as claimed in claim 1 in the form of a linear or sheet-like textile.

3. A structure as claimed in claim 2, in which the textile has been built up from synthetic fibers.

4. A structure as claimed in claim 1 in the form of a plastic film or of a plastic molding.

5. A structure as claimed in any of the preceding claims, where the polymer incorporates
a) at least one polyisocyanate, and
b) at least one compound having at least two groups reactive toward isocyanate groups and also having at least one tertiary amino group,
where at least some of the tertiary amino groups are present in the form of the products of their reaction with at least one neutralizing and/or quaternizing agent.

6. A structure as claimed in claim 5, where the neutralizing agent is carbonic acid.

7. A polymer composed of
a) at least one incorporated polyisocyanate, and
b) at least one incorporated compound having at least two groups reactive toward isocyanate groups and also having at least one tertiary amino group,
where at least some of the tertiary amino groups are present in the form of the products of their reaction with at least one neutralizing and/or quaternizing agent, where the content of urethane groups and/or urea groups is in the range from 3 to 8 mol/kg.

8. A polymer as claimed in claim 7, where the neutralizing agent is carbonic acid.

9. The use of polymers which incorporate
a) at least one polyisocyanate, and
b) at least one compound having at least two groups reactive toward isocyanate groups and also having at least one tertiary amino group,
where at least some of the tertiary amino groups are present in the form of the products of their reaction with at least one neutralizing and/or quaternizing agent, and where the content of urethane groups and/or urea groups is in the range from 3 to 8 mol/kg, for modifying the surface properties of solid substances.

10. The use as claimed in claim 9, where the neutralizing agent is carbonic acid.

11. A process for modifying the surface properties of particulate, linear, sheet-like, or three-dimensional structures, by applying, to the surface of these, an effective amount of a polymer which incorporates
a) at least one polyisocyanate, and
b) at least one compound having at least two groups reactive toward isocyanate groups and also having at least one tertiary amino group,
where at least some of the tertiary amino groups are present in the form of the products of their reaction with at least one neutralizing and/or quaternizing agent, and where the content of urethane groups and/or urea groups is in the range from 3 to 8 mol/kg.

12. A process for modifying the surface properties of particulate, linear, sheet-like, or three-dimensional structures, by modifying the material of which the structure is composed with an effective amount of a polymer which incorporates
a) at least one polyisocyanate, and
b) at least one compound having at least two groups reactive toward isocyanate groups and also having at least one tertiary amino group,
where at least some of the tertiary amino groups are present in the form of the products of their reaction with at least one neutralizing and/or quaternizing agent, and where the content of urethane groups and/or urea groups is in the range from 3 to 8 mol/kg, and by producing the structure from this material.

13. A process as claimed in claim 11 or 12, where the neutralizing agent is carbonic acid.

## Revendications

1. Objet particulaire, linéaire, plan ou en trois dimensions contenant, au moins sur sa surface, une quantité à activité hydrophilisante d'au moins un polymère qui présente des groupes uréthanne et/ou urée ainsi que des groupes ammonium, dans lequel la teneur en groupes uréthanne et/ou urée va de 3 mol/kg à 8 mol/kg.

2. Objet selon la revendication 1 sous la forme d'un objet textile linéaire ou plan.

3. Objet selon la revendication 2, dans lequel l'objet textile est formé de fibres synthétiques.

4. Objet selon la revendication 1 sous la forme d'un film de matière plastique ou d'un corps moulé de matière plastique.

5. Objet selon l'une quelconque des revendications précédentes, dans lequel le polymère contient
a) au moins un polyisocyanate et
b) au moins un composé comprenant au moins deux groupes réactifs envers les groupes isocyanate et, en outre, au moins un groupe amino tertiaire,
dans lequel au moins une partie des groupes amino tertiaire se présente sous la forme de leurs produits de réaction avec au moins un agent de neutralisation et/ou de quaternisation.

6. Objet selon la revendication 5, dans lequel l'agent de neutralisation est l'acide carbonique.

7. Polymère composé
a) d'au moins un polyisocyanate et
b) d'au moins un composé comprenant au moins deux groupes réactifs envers les groupes isocyanate et, en outre, au moins un groupe amino tertiaire,
dans lequel au moins une partie des groupes amino tertiaire se présente sous la forme de leurs produits de réaction avec au moins un agent de neutralisation et/ou de quaternisation, la teneur en groupes uréthanne et/ou urée allant de 3 mol/kg à 8 mol/kg.

8. Polymère selon la revendication 7, dans lequel l'agent de neutralisation est l'acide carbonique.

9. Utilisation de polymères qui contiennent
a) au moins un polyisocyanate et
b) au moins un composé comprenant au moins deux groupes réactifs envers les groupes isocyanate et, en outre, au moins un groupe amino tertiaire,
dans lequel au moins une partie des groupes amino tertiaire se présente sous la forme de leurs produits de réaction avec au moins un agent de neutralisation et/ou de quaternisation, et dans lequel la teneur en groupes uréthanne et/ou urée va de 3 mol/kg à 8 mol/kg, pour la modification des propriétés de surface de matières solides.

10. Utilisation selon la revendication 9, dans laquelle l'agent de neutralisation est l'acide carbonique.

11. Procédé de modification des propriétés de surface d'objets particulaires, linéaires, plans ou en trois dimensions, dans lequel on dépose, sur la surface de ces objets, une quantité efficace d'un polymère qui contient
a) au moins un polyisocyanate et
b) au moins un composé comprenant au moins deux groupes réactifs envers les groupes isocyanate et, en outre, au moins un groupe amino tertiaire,
dans lequel au moins une partie des groupes amino tertiaire se présente sous la forme de leurs produits de réaction avec au moins un agent de neutralisation et/ou de quaternisation, et dans lequel la teneur en groupes uréthanne et/ou urée va de 3 mol/kg à 8 mol/kg.

12. Procédé pour la modification des propriétés de surface d'objets particulaires, linéaires, plans ou en trois dimensions, dans lequel on modifie la matière première dont se compose l'objet, et on fabrique l'objet à partir de cette matière, à l'aide d'une quantité efficace d'un polymère qui contient
a) au moins un polyisocyanate et
b) au moins un composé comprenant au moins deux groupes réactifs envers les groupes isocyanate et, en outre, au moins un groupe amino tertiaire,
dans lequel au moins une partie des groupes amino tertiaire se présente sous la forme de leurs produits de réaction avec au moins un agent de neutralisation et/ou de quaternisation, et dans lequel la teneur en groupes uréthanne et/ou urée va de 3 mol/kg à 8 mol/kg.

13. Procédé selon la revendication 11 ou 12, dans lequel l'agent de neutralisation et l'acide carbonique.
